Europäisches Patentamt

European Patent Office

Office européen des brevets

(11) Numéro de publication: **0 129 487**
**B1**

(12) **FASCICULE DE BREVET EUROPEEN**

(45) Date de publication du fascicule du brevet: **11.05.88**

(51) Int. Cl.⁴: **G 06 F 13/40,** G 06 F 13/14

(21) Numéro de dépôt: **84401298.9**

(22) Date de dépôt: **21.06.84**

(54) **Installation de calcul à commutation automatique de périphériques et périphérique propre à de telles commutations.**

(30) Priorité: **21.06.83 FR 8310247**

(43) Date de publication de la demande:
**27.12.84 Bulletin 84/52**

(45) Mention de la délivrance du brevet:
**11.05.88 Bulletin 88/19**

(84) Etats contractants désignés:
**AT BE CH DE GB IT LI LU NL SE**

(56) Documents cités:
DE-A-1 424 762
FR-A-2 212 963
US-A-3 214 739
US-A-4 314 164

IBM TECHNICAL DISCLOSURE BULLETIN, vol. 18, no. 2, juillet 1975, page 548, New York, US; K.D. CUMMINGS et al.: "Two-channel switch"

(73) Titulaire: **ELECTRICITE DE FRANCE Service National**
**2, rue Louis Murat**
**F-75008 Paris (FR)**

(72) Inventeur: **Baize, Dominique**
**72, Résidence du Moulin**
**F-01150 Lagnieu (FR)**
Inventeur: **Cleaud, Maurice**
**1, Boulevard Léon Gontier**
**F-38230 Pont de Cheruy (FR)**
Inventeur: **Minard, Serge**
**Le Charveyron**
**F-01150 Lagnieu (FR)**

(74) Mandataire: **Fort, Jacques et al**
**CABINET PLASSERAUD 84, rue d'Amsterdam**
**F-75009 Paris (FR)**

EP 0 129 487 B1

Courier Press, Leamington Spa, England.

## Description

La présente invention concerne les installations de calcul susceptibles d'incorporer plusieurs calculateurs fonctionnant de façon indépendante, prévus pour être associés à des périphériques d'entrée ou de sortie (tels que lecteurs de cartes, unités de disques, imprimantes, modems, ...). Dans les installations actuelles, chaque calculateur indépendant est muni de périphériques qui lui sont affectés, même lorsque chacun de ces périphériques serait propre à être utilisé, éventuellement par l'intermédiaire d'un adaptateur avec l'un quelconque des calculateurs. On connaît toutefois des dispositifs permettant de commuter, par voie mécanique, un périphérique sur l'un ou l'autre des calculateurs, pour remplir les besoins pour un programme de calcul particulier. Ces commutations mécaniques présentent les défauts de commutation inhérents à la technologie et, au surplus, s'adaptent très mal au caractère aléatoire du besoin de connexion des divers calculateurs à un périphérique déterminé.

On connaît également (FR—A—2 212 963) une installation de calcul de genre défini dans le préambule de la revendication 1, comportant un périphérique accessible par deux calculateurs. La montage de l'installation est complètement symétrique et la réalisation de la liaison entre un calculateur et le périphérique exige deux séquences successives, accomplies par une cascade complexe de bascules et de portes.

La présente invention vise à fournir une installation à plusieurs calculateurs qui, au cours de leur fonctionnement, doivent temporairement coopérer avec les mêmes périphériques de même nature, dans laquelle une priorité d'accès est donnée à un calculateur et ce de façon simple.

Dans ce but, l'invention propose une installation suivant la partie caractérisante de la revendication 1.

L'invention est susceptible de nombreux modes de réalisation. Plusieurs périphériques de types différents peuvent chacun être équipé de façon à être utilisable en alternance par les divers calculateurs.

Les moyens d'établissement de la liaison dépendront évidemment de la nature du périphérique. Dans certains cas, par exemple celui d'un périphérique d'entrée tel qu'un lecteur, il suffira d'établir la liaison, le calculateur se chargeant ultérieurement des commandes nécessaires. Dans d'autres cas, par exemple celui d'un imprimante, des commandes supplémentaires pourront être nécessaires pour bien séparer les données provenant des divers calculateurs. Cette séparation peut notamment se faire par saut de page ou inscription d'indications de référence.

L'invention sera mieux comprise à la lecture de la description qui suit d'installations qui en constituent des modes particuliers de réalisation donnés à titre d'exemples non limitatifs. La description se réfère aux dessins qui l'accompagnent, dans lesquels:

—les figures 1a et 1b sont des synoptiques de principe montrant la logique et les moyens de commutation prévus dans l'installation pour permettre l'accès de deux calculateurs appartenant à l'installation à un périphérique de sortie commun, constitué par une imprimante;

—la figure 2 est un chronogramme des signaux échangés entre calculateurs et imprimante, les diverses lignes montrant l'allure des signaux qui apparaissent aux points des figures 1a et 1b portant la même désignation;

—la figure 3 est un synoptique de principe montrant une installation à deux périphériques banalisés.

Avant de décrire l'installation, on rappelera les opérations qui interviennent lors du raccordement d'un périphérique constitué par un lecteur de cartes.

Lorsqu'un calculateur doit accéder au lecteur de cartes, il y a émission d'un signal de demande d'accès sur un plot particulier de son connecteur. On supposera que la logique interne du calculateur est telle que le signal de demande d'accès est constitué par un passage au niveau logique 1 sur le plot correspondant, le niveau revenant à zéro une fois la carte lue. Il faut noter à ce sujet que les moyens de commutation peuvent être adaptés au cas où un calculateur fonctionne en logique positive, un autre en logique négative, moyennant la simple adjonction d'adaptateurs.

Le dialogue n'est établi qu'à réception par le calculateur d'un signal "PRET" du lecteur. Les moyens inhibent la réception de ce signal par les autres calculateurs une fois une demande d'accès reçue du premier calculateur. Ce résultat est atteint en interposant, entre la borne de demande d'accès (émission du signal fréquemment dénommé "Pick command" et la borne de réception du signal "PRET" sur le connecteur correspondant, un circuit qui est le même pour chacun des calculateurs.

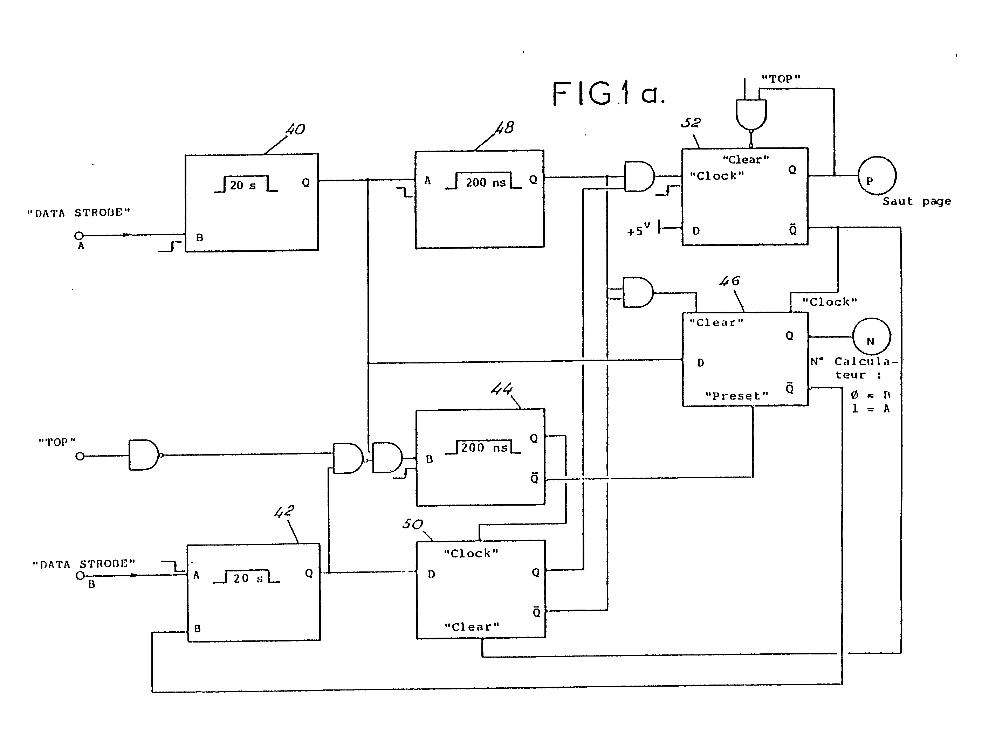

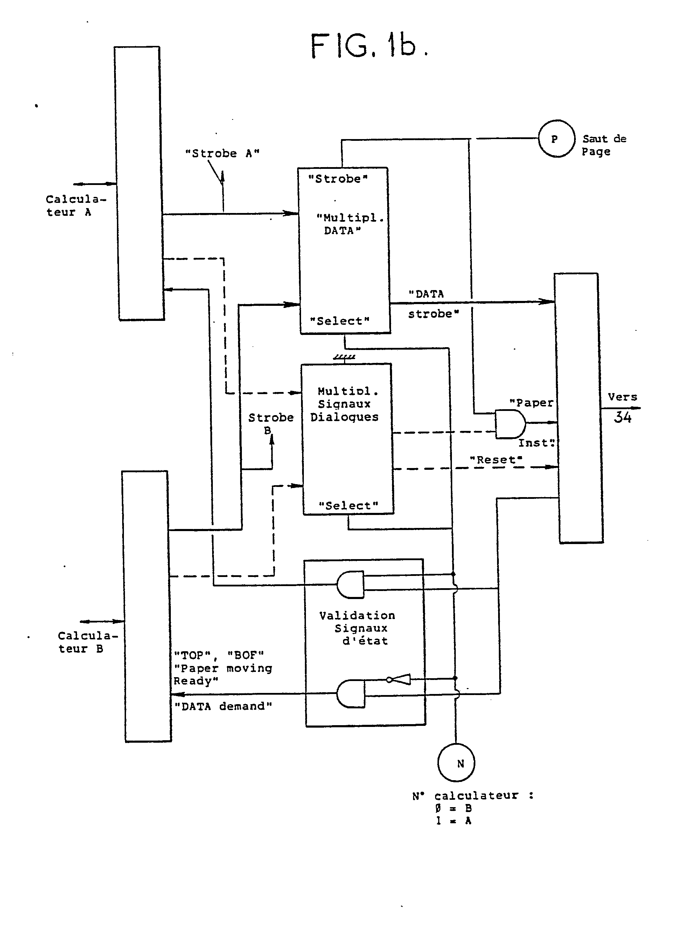

Les moyens montrés en figures 1a et 1b sont prévus pour autoriser l'accès non pas à un lecteur de carte mais à une imprimante par deux calculateurs A et B. Pour l'installation donnée à titre d'exemple, dix-neuf signaux sont échangés entre l'interface calculateur et l'imprimante 34.

—Ready (prêt): signale que l'imprimante 34 est prête à être mise en ligne par l'opérateur.

—On line (en ligne): l'imprimante est connectée en automatique.

—Data demand (demande de données): signal de transmission de données.

—Data stobe (validation de données): signal de validation des données.

—Data 1—7 (données 1—7): signaux de données (code ASCII).

—Paper instruction (instruction papier): signal de déroulement du papier.

—Top (haut): position haut de page.

Les autres signaux sont des données d'état.

Dans le cas particulier évoqué, une priorité est donnée au calculateur A. Dans le cas où une permutation est demandée par le calculateur prioritaire alors que l'imprimante est occupée, la permutation n'est effective qu'à la détection du signal "haut de page". Le retour vers le calculateur B en fin de transfert de A est précédé d'une commande de saut de page, de manière à bien séparer les informations.

Si aucun calculateur n'a besoin de l'imprimante, celle-ci est connectée au calculateur B. Les signaux P et N sont à zéro.

(1) L'arrivée du signal de validation du calculateur prioritaire (data Strobe A) entraîne la montée du monostable 40.

a) si le monostable 42 est à zéro (ce qui indique que l'imprimante est libre), le monostable 44 passe à 1 et force le basculeur 46 à l'état 1, entraînant une commutation immédiate sur le calculateur A;

b) si le monostable 42 est à l'état 1 (ce qui indique que l'imprimante 34 est occupée par le calculateur B) le monostable 44 ne sera déclenché qu'à la détection du signal TOP (haut de page). Le basculement de 44 mémorise l'état de 42 et entraîne le passage à l'état 1 du basculeur 46 qui assure la commutation.

(2) Lorsque le calculateur A a terminé ses transferts, et après temporisation, le monostable 40 retombe à zéro, le monostable 48 passe à l'état 1. Il s'ensuit que:

a) si le basculeur 50 est à l'état zéro (ce qui indique que le calculateur B n'utilisait pas l'imprimante), le basculeur 46 est forcé à zéro: l'imprimante est immédiatement aiguillée vers le calculateur B.

b) si le basculeur 50 est à l'état 1 (ce qui indique que le calculateur B utilisait l'imprimante), le basculeur 52 passe à l'état 1 et force un saut de page (Génération du signal "Paper Instruction" avec mise à zéro de DATA 1—7). A l'apparition du signal TOP (haut de page), le basculeur 52 est remis à zéro, entraînant la remise à zéro de 50 puis de 46. L'imprimante est alors aiguillée vers le calculateur B.

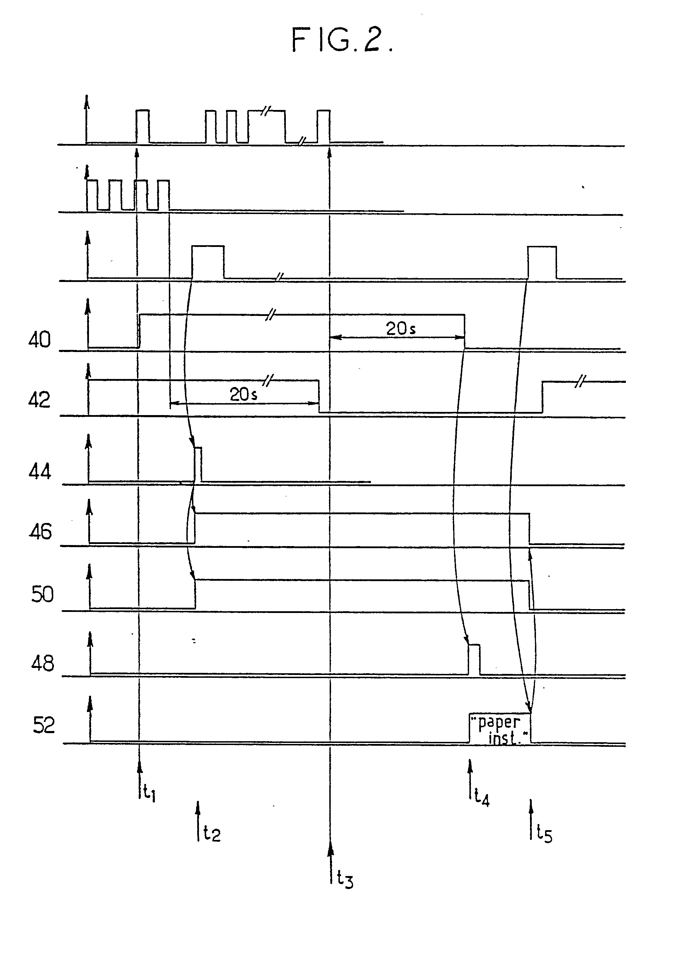

Le chronogramme de la figure 2 montre, à titre d'exemple, l'échelonnement des signaux à la suite d'une demande de commutation de l'imprimante 34 sur le calculateur A, à l'instant $t_1$ alors que le monostable 42 est à l'état haut (cas 1b ci-dessus). La commutation sur le calculateur A n'intervient alors qu'en réponse à la détection du signal TOP à l'instant $t_2$. Le monostable reconductible 40 reste à l'état 1 pendant une durée déterminée (20 s par exemple) après l'instant $t_3$ de fin de transfert à partir du calculateur A. Le retour à zéro du monostable 40 provoque le passage à 1 du monostable 48, de durée très faible par rapport à celle de 40 (200 ns au lieu de 20 s par exemple) et l'émission de l'ordre de saut de page "paper instruction" à l'instant $t_4$. Puis, dès apparition du signal TOP, à l'instant $t_5$, il y a retour du branchement de l'imprimante sur le calculateur B et fin du signal "PAPER INSTRUCTION".

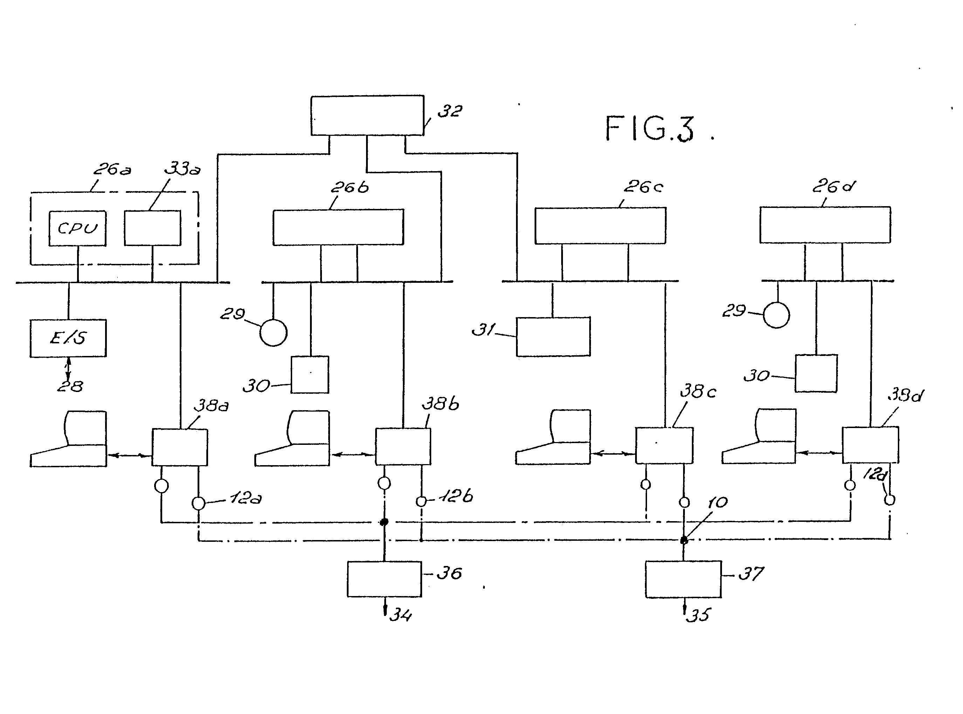

La figure 3 montre une installation comportant un centre de calcul à trois calculateurs 26a, 26b et 26c travaillant en parallèle et un calculateur de rechange 26d. Le centre de calcul peut par exemple constituer un simulateur de conduite de réacteur de puissance à eau sous pression. Le centre de calcul doit alors permettre:

—l'exécution des calculs de simulation,

—le contrôle et la commande du processus simulé,

—le contrôle et la commande des périphériques,

—l'exécution des programmes de maintenance,

—l'exécution des programmes d'aide au développement de logiciel.

Pour cela, le centre de calcul comporte de nombreuses entrées/sorties industrielles 28 vers la salle de commande, des mémoires à grande capacité (à disque dur 29 et bande magnétique 30 par exemple), un générateur de caractères 31, etc... ainsi qu'une mémoire vive 32 accessible par tous les calculateurs et s'ajoutant aux mémoires individuelles telles que 33a des unités centrales, ou CPU.

Deux périphériques de l'installation sont peu utilisés: il s'agit de l'imprimante 34 et du lecteur de cartes 35. S'ils sont en effet indispensables pour l'initialisation et le démarrage journalier du simulateur, le reste du temps ils ne sont guère utilisés que sur le centre de calcul annexe employant le calculateur 26d et pendant les travaux de maintenance.

L'utilisation d'un seul lecteur 35 et d'une seule imprimante 34 représente une économie considérable.

L'imprimante 34 est normalement connectée sur le calculateur 26a du simulateur pour permettre l'impression des messages du moniteur temps réel qui n'est pas capable d'éditer ses messages à posteriori. Mais l'imprimante est surtout utilisée comme périphérique de sortie du centre de calcul annexe, pour les travaux en lots sur le simulateur et pour les opérations de maintenance.

La banalisation du lecteur de cartes 35 et de l'imprimante 34 s'effectue en affectant à chacun un commutateur 36 ou 37.

Dans la pratique, on pourra réaliser les portes et les monostables de temporisation en logique TTL et implanter le commutateur dans une armoire de calculateur. L'alimentation peut être prévue à partir du lecteur pour eviter d'avoir à mettre le calculateur sous tension lorsqu'on veut relier le lecteur aux autres calculateurs. Les liaisons peuvent être réalisées par des connecteurs plats classiques.

Les périphériques banalisés être en nombre accru et comprendre par exemple une unité à bandes magnétiques.

**Revendication**

Installation de calcul comprenant deux calculateurs numériques et au moins un périphérique constitué par une imprimante (34) capable de dialoguer avec l'un quelconque des calculateurs, comprenant des moyens (36, 37) pour, en réponse à une demande d'accès au périphérique émise par l'un quelconque des calculateurs, provoquer l'établissement de la liaison entre le calculateur et le périphérique, si ce dernier est libre en autorisant la transmission d'un signal "Prêt" du périphérique à ce calculateur et interdire l'accès au périphérique par l'autre calculateur, en inhibant la réception du signal "Prêt" par l'autre calculateur une fois ladite demande d'accès reçue, caractérisée en ce que, le premier calculateur étant prioritaire, l'installation comprend des moyens (36, 37) pour, au repos, relier l'imprimante à l'autre calculateur, et en réponse à une demande d'accès à l'imprimante émise par le premier calculateur, provoquer l'établissement immédiat de la liaison entre ce premier calculateur et l'imprimante, si cette dernière est libre, et n'effectuer la permutation de l'imprimante sur le calculateur prioritaire, sur demande d'accès par ce dernier, que lors de l'émission d'un signal haut de page par l'imprimante si cette dernière est occupée.

**Patentanspruch**

Rechenanlage mit zwei numerischen Rechnern und zumindest einem Peripheriegerät, das durch einen Drucker (34) gebildet ist, der mit jedem der Rechner dialogfähig ist, mit Mitteln (36, 37), die als Antwort auf eine Zugriffsforderung eines der Rechner an das Peripheriegerät die Herstellung einer Verbindung zwischen diesem Rechner und dem Peripheriegerät einleiten, wenn des letztere frei ist, indem sie die Übertragung eines "Bereit"-Signals des Peripheriegerätes an den betreffenden Rechner veranlassen und den Zugang zum Peripheriegerät über den anderen Rechner unterbinden, indem sie den Empfang des "Bereit"-Signals durch den anderen Rechner verhindern, sobald die Zugriffsforderung empfangen ist, dadurch gekennzeichnet, daß der erste Rechner Priorität genießt und die Anlage Mittel (36, 37) aufweist, welche den Drucker im Ruhezustand mit dem anderen Rechner verbinden und als Antwort auf eine Zugriffsforderung des ersten Rechners an den Drucker eine unmittelbare Verbindung zwischen dem ersten Rechner und dem Drucker herstellen, falls der letztere frei ist, hingegen die Umstellung des Druckers auf den Priorität genießenden Rechner nach einer Zugriffsforderung des letzteren erst nach Aussendung eines "Seitenanfangs"-Signals durch den Drucker ausführen, falls der letztere besetzt ist.

**Claim**

Computing apparatus comprising two digital computers and at least one peripheral unit consisting of a printer (34) able to cooperate with either computer, comprising means (36, 37) arranged for, in response to a request for access to the peripheral unit delivered by either computer, causing connection between the computer and the peripheral unit if the latter is free by authorizing passage of a "ready" signal from the peripheral unit to the computer while preventing access to the peripheral unit by the other computer by inhibiting reception of the "ready" signal by the other computer after said request for access has been received, characterized in that, the first computer having an access priority, the apparatus comprises means (36, 37) for connecting the printer to the other computer at rest and, responsive to a request for access to the printer transmitted by the first computer, for immediately causing connection between the first computer and the printer if the latter is free and for switching the printer on the computer having an access priority, upon a request for access by the latter, only when a page top signal is delivered by the printer if the latter is busy.

FIG.1 a.

# FIG. 1b.

Calculateur A

"Strobe A"

"Strobe"

"Multipl.
DATA"

"Select"

"DATA
strobe"

P    Saut de
Page

Multipl.
Signaux
Dialogues

"Select"

Strobe
B

"Paper

Inst:"

"Reset"

Vers
34

Validation
Signaux
d'état

Calculateur B

"TOP", "BOF"
"Paper moving
Ready"

"DATA demand"

N

N° calculateur :
Ø = B
1 = A

# FIG.2.

FIG.3.